# EUROPÄISCHE PATENTANMELDUNG

(11) **EP 2 778 641 A2**
(43) Veröffentlichungstag der Anmeldung: **17.09.2014**
(21) Anmeldenummer: 14000817.8
(22) Anmeldetag: 07.03.2014
(51) Int. Cl.: G01L 1/26, G06Q 10/08, G07F 9/02

(54) **Sensorvorrichtung und Ablagevorrichtung mit einer Sensorvorrichtung**

(30) Priorität: 08.03.2013 DE 102013004031
(71) Anmelder: Würth Elektronik ICS GmbH & Co. KG, 74613 Öhringen (DE)
(72) Erfinder: Wittig, Klaus, 74613 Öhringen / Kappel (DE)
(74) Vertreter: Schatt, Markus F.

(57) **Zusammenfassung**

Ablagevorrichtung (1), aufweisend:
■ einen Ablagebehälter (10) mit einer Zwischenplatte (14),
■ eine auf dem Ablagebehälter (10) gelegene Sensormatte (100), wobei die Sensormatte (100) zumindest zwei Positionierungsausnehmungen (101 a, 101 b, 101c, 101d, 101e, 101f, 101g, 101h) zur Positionierung der Sensormatte (100) innerhalb eines maximal zulässigen Bewegungsbereichs und zumindest eine Erfassungs-Teilschicht aufweist,

wobei die Zwischenplatte (14) oder die Seitenwandung (20) zumindest eine Durchgangsöffnung (50) zur Hindurchführung einer mit der Sensormatte (100) verbundenen elektrischen Anschlussvorrichtung (107) aufweist, um einen Anschluss der Sensormatte an eine in dem Elektronik-Aufnahmeraum angeordneten Leiterplatte (80) zu ermöglichen,
wobei die Zwischenplatte (14) Positionierungsstifte (102a, 102b, 102c, 102d, 102e, 102f, 102g, 102h) aufweist, die von der Zwischenplatte (14) mit ihrer Längsrichtung in der Dickenrichtung des Ablagebehälters (10) wegragen, wobei die Positionierungsstifte (102a, 102b, 102c, 102d, 102e, 102f, 102g, 102h) derart auf der Zwischenplatte angeordnet und derart gestaltet sind, dass sich jeder Positionierungsstift (102a, 102b, 102c, 102d, 102e, 102f, 102g, 102h) in jeweils eine Positionierungsausnehmung hinein erstreckt und in seinem Querschnitt über seine gesamte Längserstreckung derart gestaltet ist, dass die Positionierungsausnehmung eine lokale Bewegbarkeit der Sensormatte (100) in allen Richtungen ihrer flächigen Erstreckung innerhalb des maximal zulässigen Bewegungsbereichs zulässt.

## Beschreibung

Diese Patentanmeldung beansprucht den Anmeldetag der deutschen Patentanmeldung DE 10 2013 004 031.0, die beide am 08.03.2013 eingereicht worden sind. Durch die hiermit vorgenommene Bezugnahme sind die Offenbarungen dieser Patentanmeldungen in der hier vorliegenden Patentanmeldung enthalten.

Die Erfindung betrifft eine Sensorvorrichtung und Ablagevorrichtung mit einer Sensorvorrichtung.

Aus dem generellen Stand der Technik sind Ablagevorrichtungen zum Abstellen von Gegenständen bekannt, die eine flächenhaft drucksensitive Sensorvorrichtung aufweist, um das Abstellen von Gegenständen auf der Ablagevorrichtung zu erfassen. Diese sind nicht an spezielle Anwendungsgegebenheiten angepasst.

Aufgabe der Erfindung ist, eine Sensorvorrichtung zum flächenhaften Erfassung des Abstellens von Gegenständen und eine Ablagevorrichtung mit einer solchen Sensorvorrichtung bereitzustellen, die jeweils für Kühlschränke in vorteilhafter Weise einsetzbar ist.

Diese Aufgabe wird mit den Gegenständen der unabhängigen Ansprüche gelöst. Weitere Ausführungsformen der Erfindung sind in den auf diese jeweils rückbezogenen Ansprüchen angegeben.

Nach einem Aspekt der Erfindung ist vorgesehen eine Sensorvorrichtung, aufweisend:
■ eine Grundplatte,
■ eine auf der Grundplatte gelegene Sensorplatte, wobei die Sensorplatte aufweist: zumindest eine Positionierungsausnehmung zur Positionierung der Sensorplatte innerhalb eines maximal zulässigen Bewegungsbereichs auf der Grundplatte, zumindest eine Erfassungs-Teilschicht und eine Anschlussvorrichtung zum elektrischen Anschließen der Sensorplatte an eine Auswertungsvorrichtung,
wobei die Grundplatte zumindest einen Positionierungshalterung aufweist, der von der Grundplatte mit seiner Längsrichtung in der Dickenrichtung der Sensorvorrichtung wegragt, wobei die Positionierungshalterung derart auf der Grundplatte angeordnet und derart gestaltet sind, dass sich jeder Positionierungshalterung in jeweils eine Positionierungsausnehmung hinein erstreckt und in seinem Querschnitt über seine gesamte Längserstreckung derart gestaltet ist, dass die Positionierungsausnehmung eine lokale Bewegbarkeit der Sensorplatte in allen Richtungen ihrer flächigen Erstreckung innerhalb des maximal zulässigen Bewegungsbereichs zulässt.

Nach einer weiteren Ausführungsform der Sensorvorrichtung ist vorgesehen, dass die Anschlussvorrichtung ein Flachkabel und eine an diesem angeordnete Steckervorrichtung zum Einstecken in eine Anschlussvorrichtung der Auswertungsvorrichtung aufweist.

Nach einer weiteren Ausführungsform der Sensorvorrichtung ist vorgesehen, dass die Anschlussvorrichtung eine direkt an der Sensorplatte ausgebildete Steckervorrichtung zum Einstecken in eine Anschlussvorrichtung der Auswertungsvorrichtung aufweist.

Nach einer weiteren Ausführungsform der Sensorvorrichtung ist vorgesehen, dass die Sensorplatte aus einer Basisplatte, einer auf dieser gelegenen Abstandhalterschicht und einer auf dieser gelegenen Leitungsschicht gebildet ist.

Nach einem Aspekt der Erfindung ist eine Ablagevorrichtung vorgesehen, die aufweist:
■ eine Aufnahmevorrichtung mit einer Bodenplatte und einer in einer Dickenrichtung der Aufnahmevorrichtung oberhalb der Bodenplatte gelegene Grundplatte, eine umlaufende Seitenwandung, die einen zwischen der Bodenplatte und der Grundplatte gelegenen Elektronik-Aufnahmeraum seitlich umgrenzt und von der Grundplatte zur seitlichen Umgrenzung eines oberhalb der Grundplatte gelegenen Sensor-Aufnahmeraums absteht,
■ eine auf der Grundplatte gelegene Sensorplatte, wobei die Sensorplatte zumindest zwei Positionierungsausnehmungen zur Positionierung der Sensorplatte (100) innerhalb eines maximal zulässigen Bewegungsbereichs und zumindest eine Erfassungs-Teilschicht aufweist,
wobei die Grundplatte oder die Seitenwandung zumindest eine Durchgangsöffnung zur Hindurchführung einer mit der Sensorplatte verbundenen elektrischen Anschlussvorrichtung aufweist, um einen Anschluss der Sensorplatte an eine in dem Elektronik-Aufnahmeraum angeordneten Auswertungsvorrichtung oder Leiterplatte zu ermöglichen,
wobei die Grundplatte zumindest eine Positionierungshalterung aufweist, die von der Grundplatte mit ihrer Längsrichtung in der Dickenrichtung der Aufnahmevorrichtung wegragen, wobei die Positionierungshalterunge derart auf der Grundplatte angeordnet und derart gestaltet sind, dass sich jeder Positionierungshalterung in jeweils eine Positionierungsausnehmung hinein erstreckt und in seinem Querschnitt über seine gesamte Längserstreckung derart gestaltet ist, dass die Positionierungsausnehmung eine lokale Bewegbarkeit der Sensorplatte in allen Richtungen ihrer flächigen Erstreckung innerhalb des maximal zulässigen Bewegungsbereichs zulässt,
wobei die Sensorplatte in ihrer flächigen Erstreckung derart gestaltet ist, dass zur Vermeidung einer Berührung des Seitenrands mit der Seitenwandung aufgrund thermischer Längenveränderung der Sensorplatte der diese umgrenzende Seitenrand an jeder Stelle einen vorbestimmten Mindestabstand von der Seitenwandung entfernt liegt.

Nach einer weiteren Ausführungsform der Ablagevorrichtung ist vorgesehen, dass der zumindest zwei Positionierungshalterungen jeweils eine zylindrische Form haben.

Nach einer weiteren Ausführungsform der Ablagevorrichtung ist dabei vorgesehen, dass die Positionierungshalterung einstückig mit der Grundplatte hergestellt sind.

Nach einer weiteren Ausführungsform der Ablagevorrichtung ist vorgesehen, dass die zumindest zwei Positionierungsausnehmungen jeweils einen kreisrunden oder zylindrischen Querschnitt haben.

Nach einer weiteren Ausführungsform der Ablagevorrichtung ist vorgesehen, dass die Sensorplatte eine Basisplatte und zumindest eine in der Sensorplatte integrierte druckempfindliche Erfassungs-Teilschicht aufweist. Nach einer weiteren Ausführungsform der Ablagevorrichtung ist dabei vorgesehen, dass die Sensorplatte zumindest zwei in der Basisplatte (110) integrierte druckempfindliche Erfassungs-Teilschichten aufweist und die Sensorplatte Schlitze aufweist, die sich von einem Seitenrand der Basisplatte her über mehr als die Hälfte des zwischen den Erfassungs-Teilschichten gelegenen Abschnitt der Sensorplatte erstrecken. Nach einer weiteren Ausführungsform der Ablagevorrichtung ist dabei vorgesehen, dass die Sensorplatte aus einer Auflageplatte und der Basisplatte gebildet ist, die Unterplatte die Positionierungsausnehmungen aufweist und die Positionierungshalterunge nur innerhalb der Auflageplatte erstrecken. Nach einer weiteren Ausführungsform der Ablagevorrichtung ist dabei vorgesehen, dass die Positionierungsausnehmungen nur in der Unterplatte ausgebildet sind und sich die Positionierungshalterunge nur innerhalb der Positionierungsausnehmungen erstrecken. Die Basisplatte oder Unterplatte kann starr gebildet sein.

Nach einer weiteren Ausführungsform der Ablagevorrichtung ist vorgesehen, dass die druckempfindliche Erfassungs-Teilschichten jeweils zwei ineinandergreifende kammförmige Folien aufweist, die in der jeweiligen Erfassungs-Teilschichten zur elektrischen Verschaltung derselben als Kondensator gelegen ist und die als Kondensator elektrisch verschaltet werden können.

Nach einer weiteren Ausführungsform der Ablagevorrichtung ist vorgesehen, dass die Abdeckvorrichtung die Sensorplatte überdeckt, und die Abdeckvorrichtung auf der Sensorplatte oder auf einer oberen Randfläche der Seitenwandung gelegen ist. Nach einer weiteren Ausführungsform der Ablagevorrichtung ist dabei vorgesehen, dass die Abdeckvorrichtung als Deckfolie oder flexible Deckplatte ausgestaltet ist.

Nach einer weiteren Ausführungsform der Ablagevorrichtung ist vorgesehen, dass der Aufnahmevorrichtung einen an der Innenfläche der Seitenwandung umlaufenden Sims aufweist, auf dem die Grundplatte gelagert ist.

Nach einer weiteren Ausführungsform der Ablagevorrichtung ist vorgesehen, dass der Aufnahmevorrichtung und die Grundplatte einstückig hergestellt sind.

Nach einer weiteren Ausführungsform der Ablagevorrichtung ist vorgesehen, dass die Durchgangsöffnung eine Randausnehmung an einem Randabschnitt der Seitenwandung aufweist.

Nach einer weiteren Ausführungsform der Ablagevorrichtung ist vorgesehen, dass die Durchgangsöffnung eine Fenster-Ausnehmung in der Seitenwandung aufweist.

Nach einer weiteren Ausführungsform der Ablagevorrichtung ist vorgesehen, dass die Durchgangsöffnung eine Randausnehmung an einem Randabschnitt der Grundplatte aufweist.

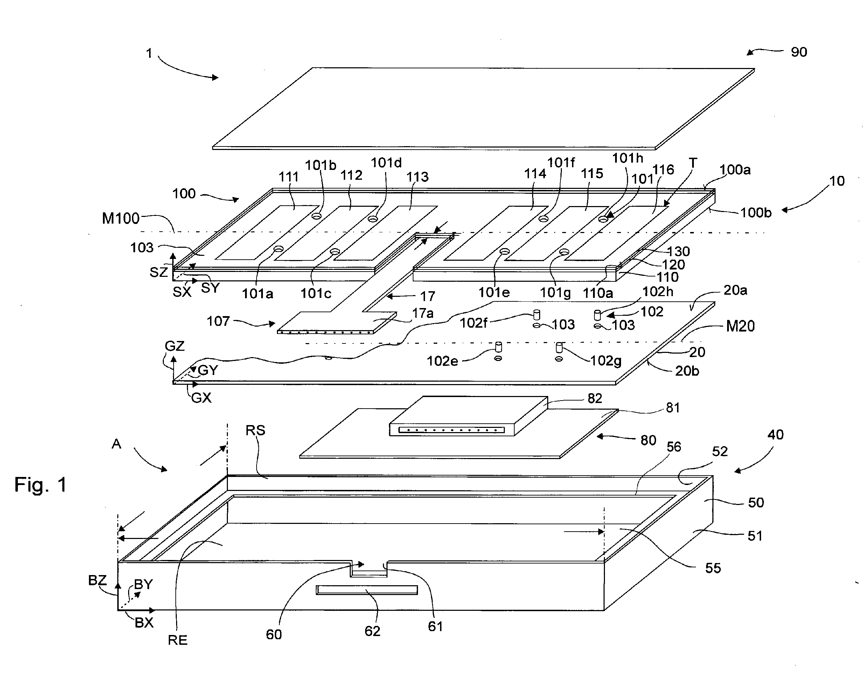

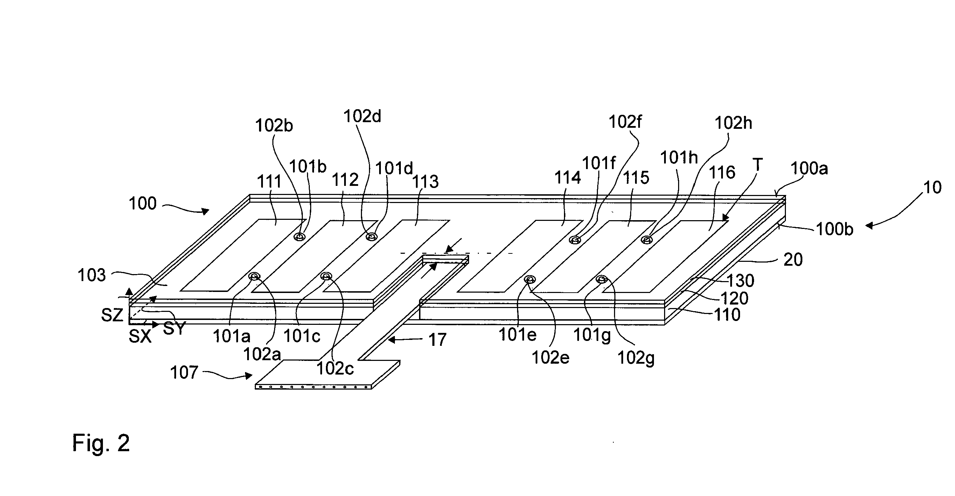

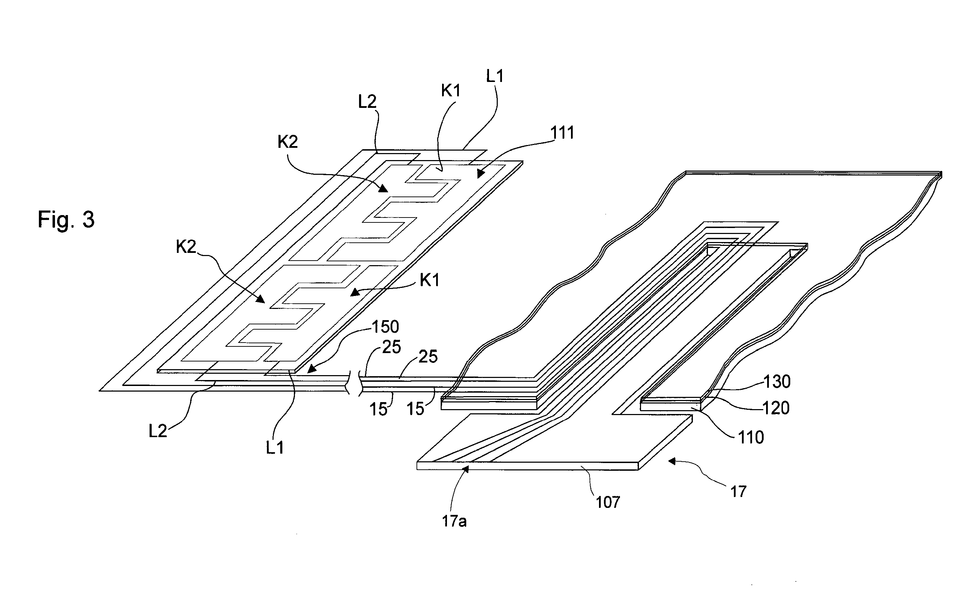

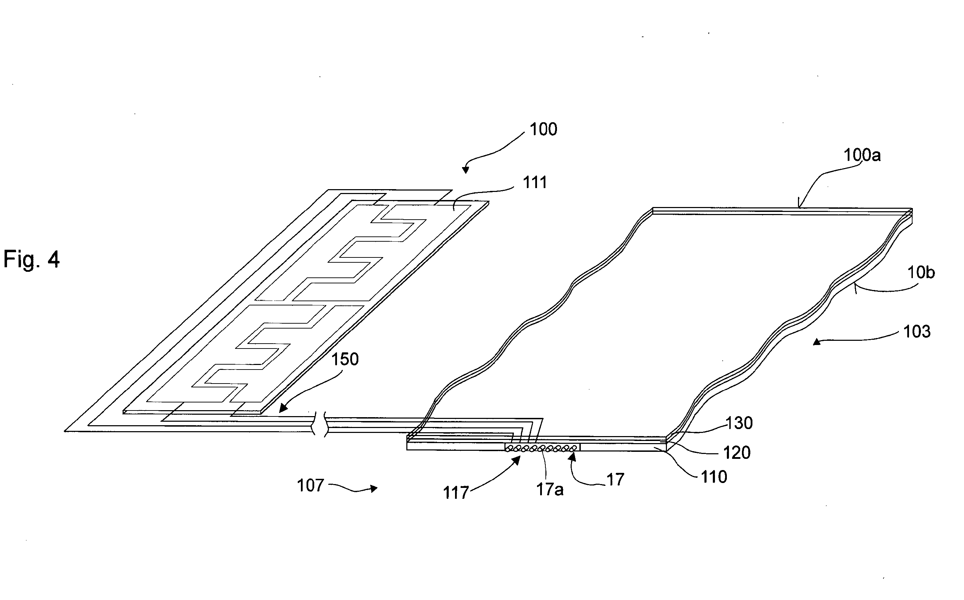

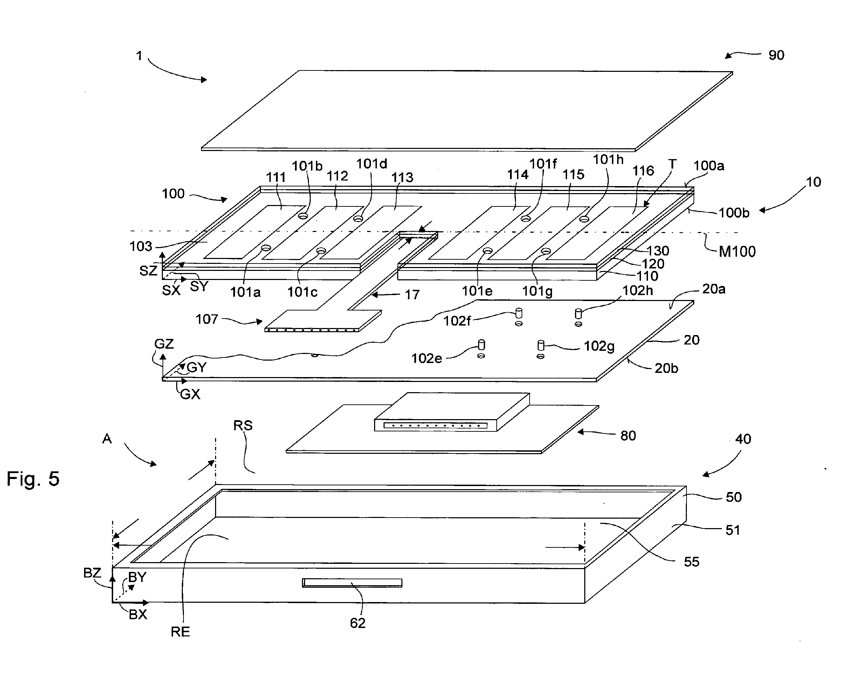

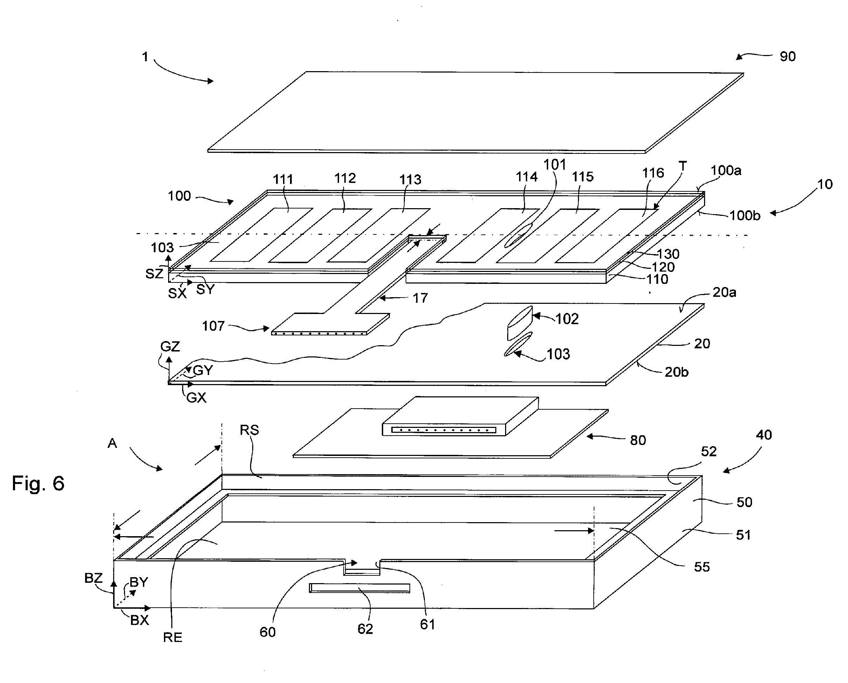

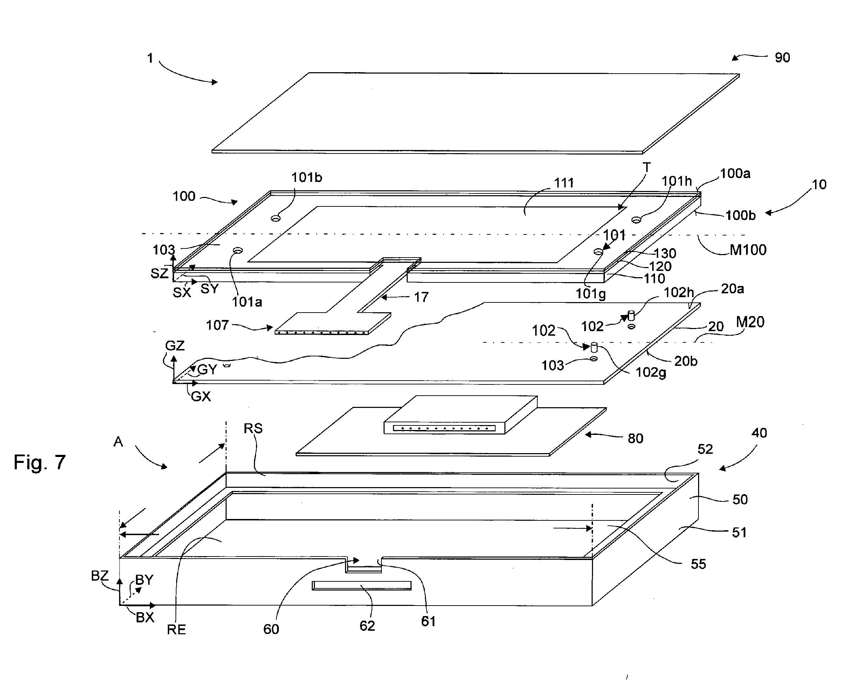

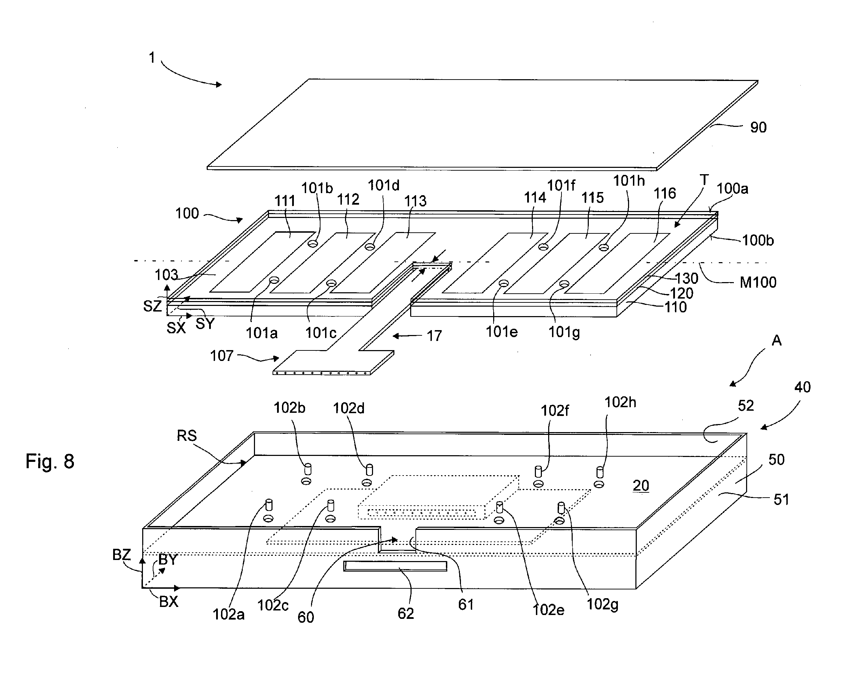

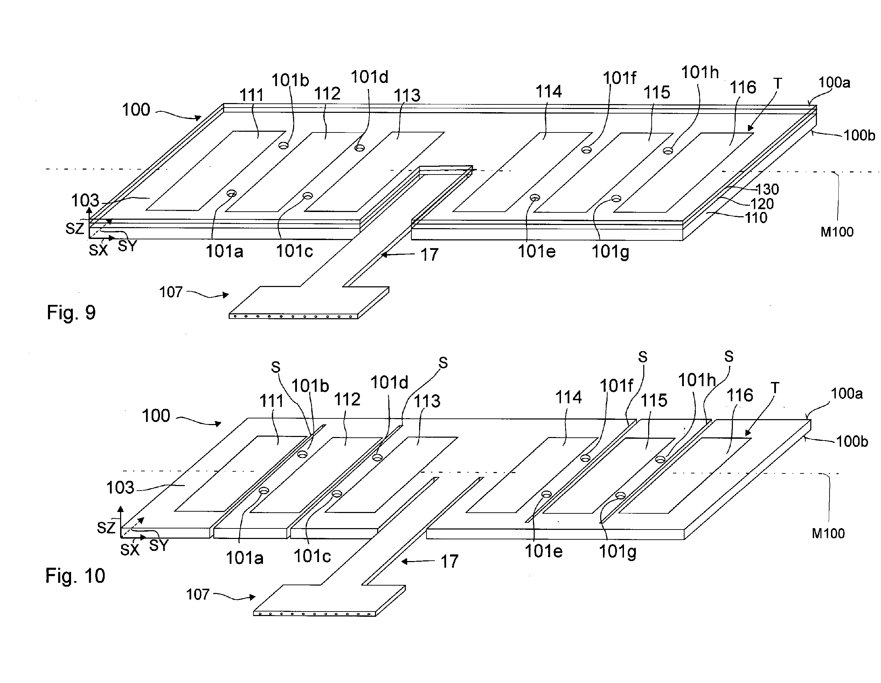

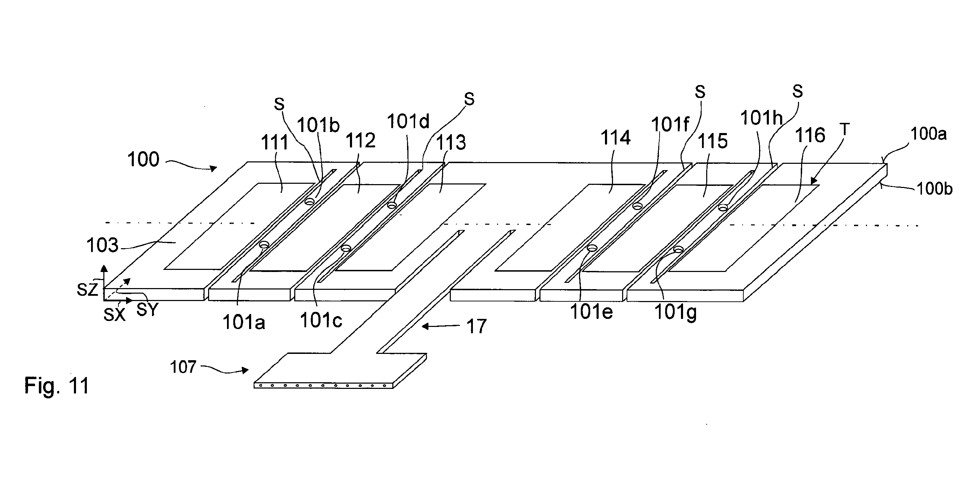

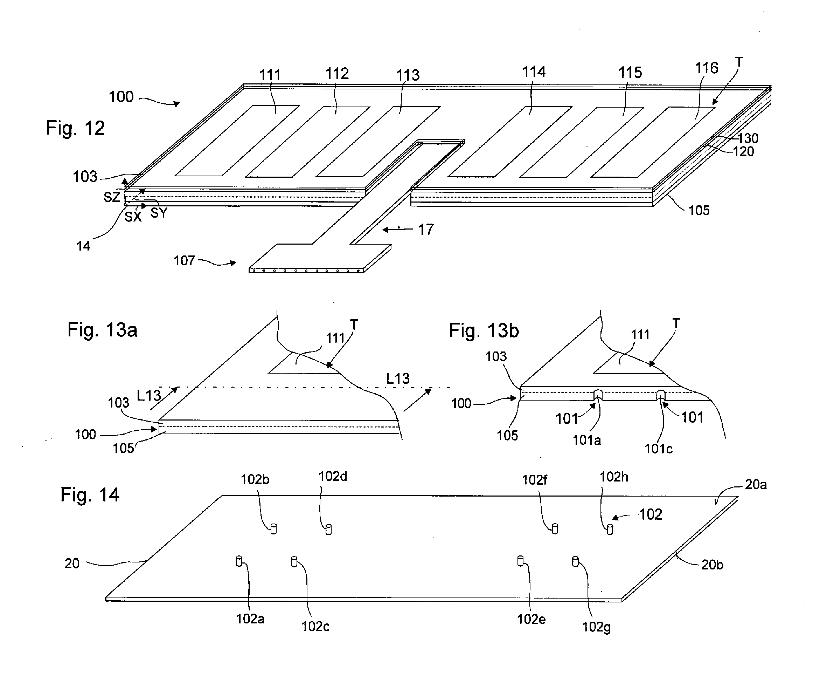

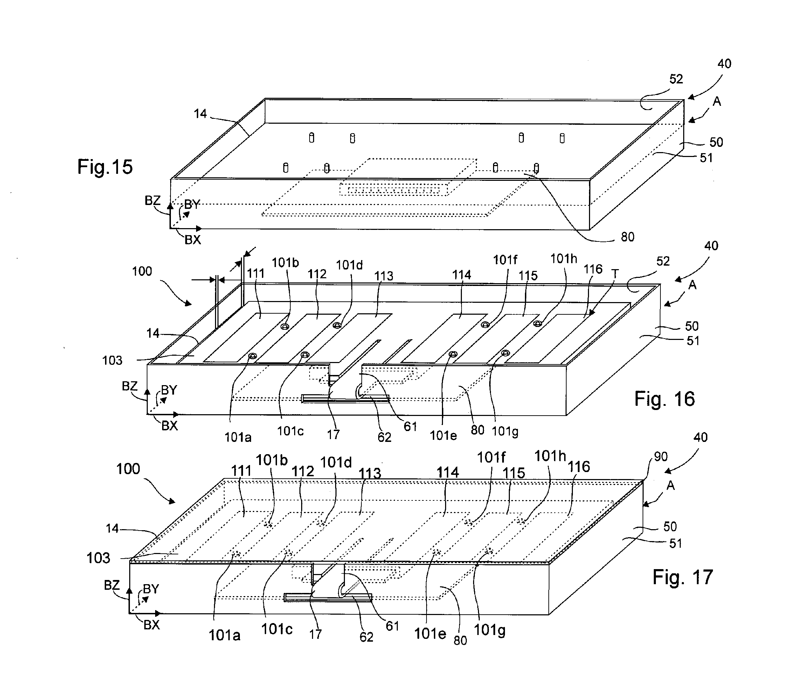

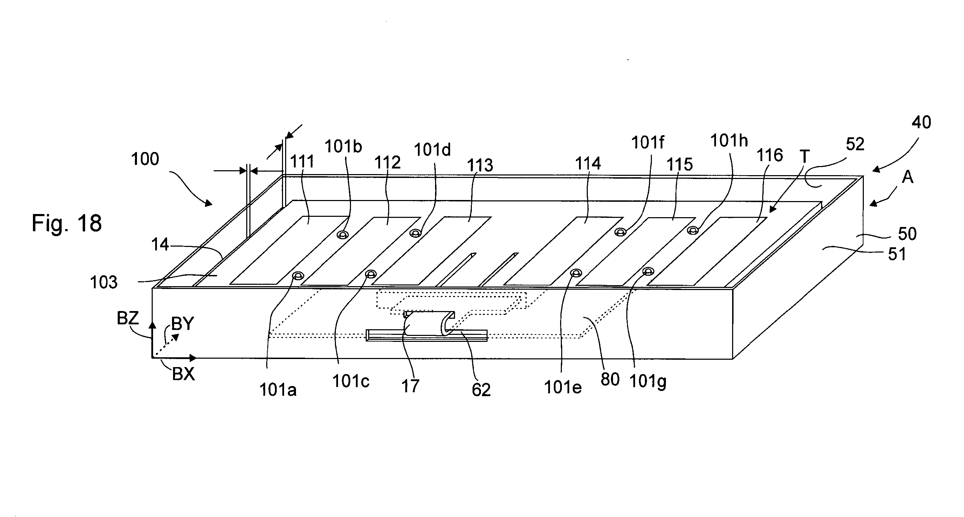

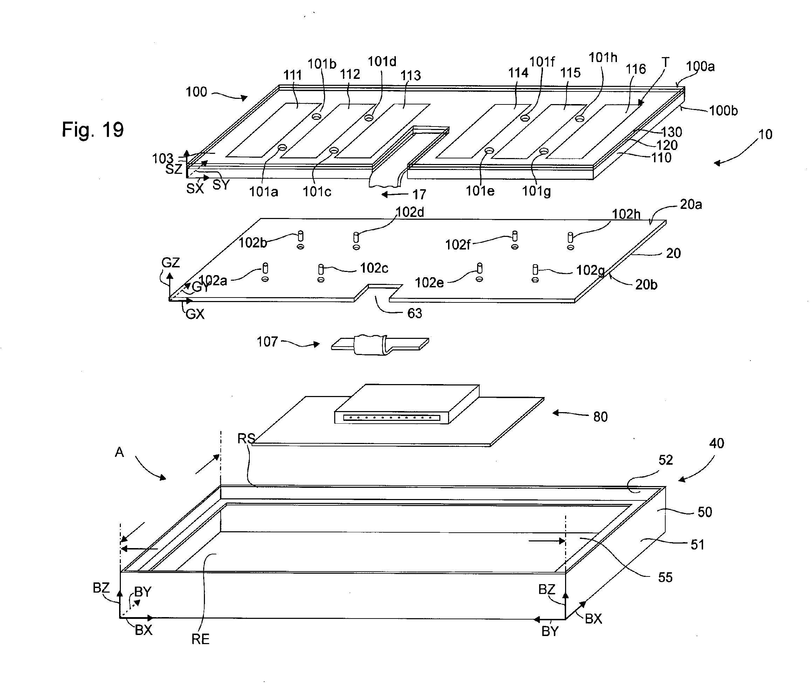

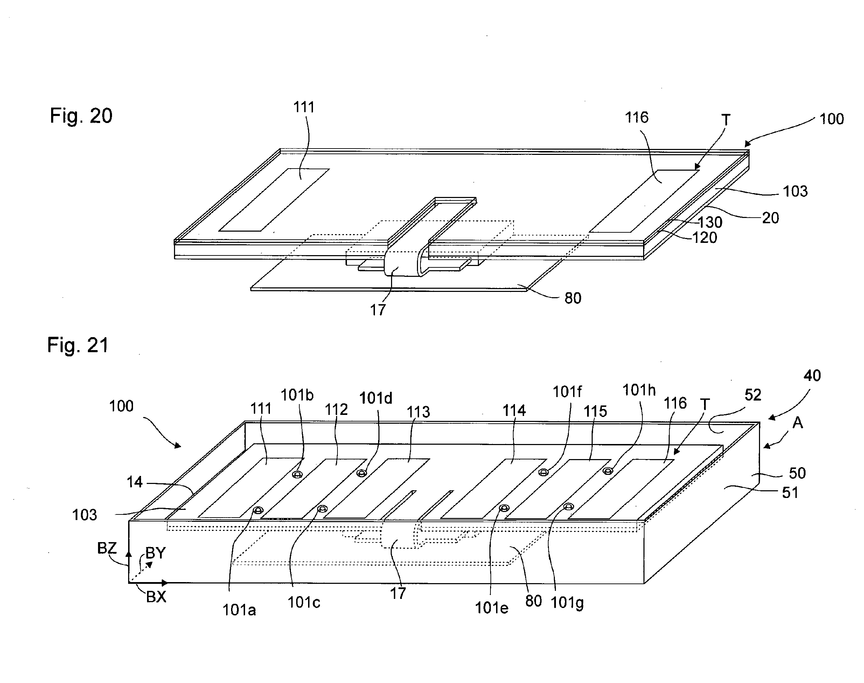

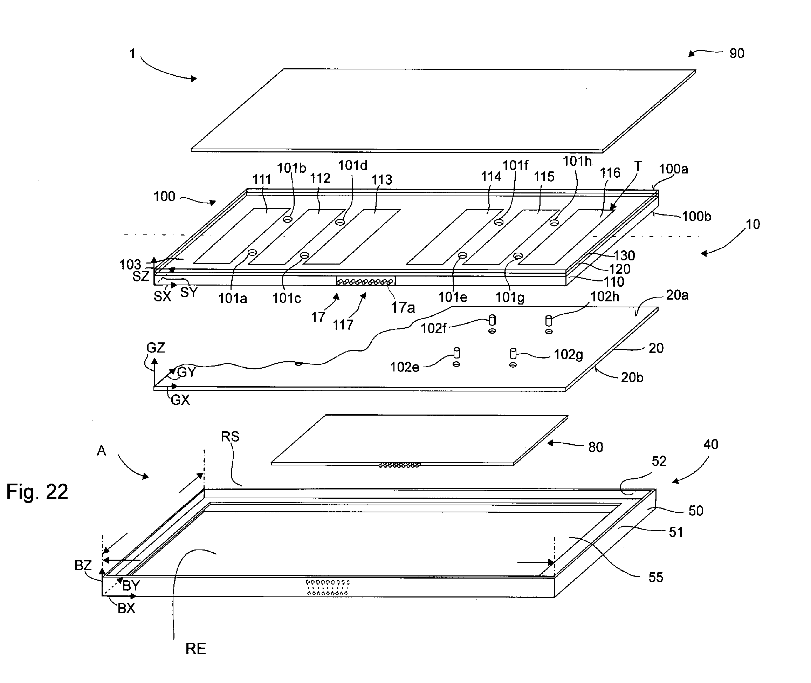

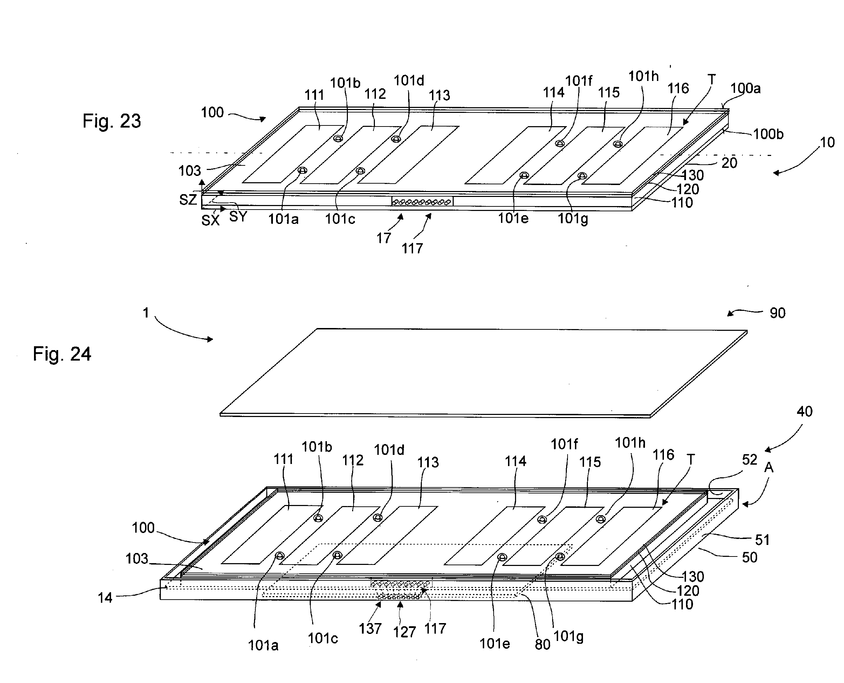

Im Folgenden werden Ausführungsformen der Erfindung an Hand der beiliegenden Figuren beschrieben, die zeigen:
■ Figur 1 eine perspektivische Darstellung einer ersten Ausführungsform der erfindungsgemäßen Ablagevorrichtung als Explosionsdarstellung, wobei die dargestellte Ausführungsform der Ablagevorrichtung eine Aufnahmevorrichtung und eine Sensorvorrichtung aufweist, die aus einer Grundplatte mit einer Mehrzahl von Positionierungshalterungen und einer Sensorplatte mit einer Mehrzahl von Positionierungsausnehmungen zur Aufnahme jeweils einer Positionierungshalterung gebildet ist,
■ Figur 2 eine Ausführungsform der erfindungsgemäßen Sensorvorrichtung, die in der Ablagevorrichtung nach der Figur 1 integriert ist,
■ Figur 3 eine perspektivische Darstellung einer ersten Ausführungsform der Sensorplatte, die aus einer Basisplatte, einer Abstandhalterschicht, einer Leitungsschicht und einer mit der Basisplatte verbundenen Anschlussvorrichtung gebildet ist, wobei Basisplatte zumindest einer Erfassungs-Teilschicht, einer Anordnung von Leiterbahnen aufweist,
■ Figur 4 eine perspektivische Darstellung einer zweiten Ausführungsform der Sensorplatte, wobei die dargestellte Sensorplatte gegenüber der Sensorplatte nach der Figur 2 eine andersartige Anschlussvorrichtung aufweist,
■ Figur 5 eine perspektivische Darstellung einer weiteren Ausführungsform der erfindungsgemäßen Ablagevorrichtung als Explosionsdarstellung, wobei die dargestellte Ablagevorrichtung gegenüber der Ablagevorrichtung nach der Figur 1 eine andersartige Aufnahmevorrichtung aufweist,
■ Figur 6 eine perspektivische Darstellung einer weiteren Ausführungsform der erfindungsgemäßen Ablagevorrichtung als Explosionsdarstellung, wobei die dargestellte Ablagevorrichtung gegenüber der Ablagevorrichtung nach der Figur 1 eine andersartige Sensorvorrichtung aufweist, die aus einer Grundplatte mit einer einzigen von Positionierungshalterung und einer Sensorplatte mit einer einzigen Positionierungsausnehmung zur Aufnahme der Positionierungshalterung gebildet ist,
■ Figur 7 eine perspektivische Darstellung einer weiteren Ausführungsform der erfindungsgemäßen Ablagevorrichtung als Explosionsdarstellung, wobei die dargestellte Ablagevorrichtung gegenüber der Ablagevorrichtung nach der Figur 1 eine andersartige Sensorvorrichtung aufweist,
■ Figur 8 eine perspektivische Darstellung einer weiteren Ausführungsform der erfindungsgemäßen Ablagevorrichtung als Explosionsdarstellung, wobei die dargestellte Ablagevorrichtung gegenüber der Ablagevorrichtung nach der Figur 1 eine andersartige Aufnahmevorrichtung aufweist,
■ Figur 9 die in der Figur 1 dargestellte Sensorvorrichtung im zusammengebauten Zustand,
■ Figur 10 eine Ausführungsform der Sensorplatte, die gegenüber der in den Figuren 1 bis 9 gezeigten Ausführungsform sich zwischen den Erfassungs-Teilschichten erstreckende Schlitze aufweist,
■ Figur 11 eine Variante der Sensorplatte nach der Figur 10,
■ Figur 12 eine weitere Variante der Sensorplatte,
■ Figur 13a einen Ausschnitt einer Sensorplatte und Figur 13b eine Querschnittsdarstellung derselben entlang der Linie L13-L13 der Figur 13a,
■ Figur 14 eine Ausführungsform der Grundplatte,
■ Figuren 15 bis 17 verschiedene Stadien des Zusammenbaus der Ablagevorrichtung nach der Figur 1 mit einer Grundplatte nach der Figur 14, wobei eine Deckfolie aufgelegt ist,
■ Figur 18 die Ablagevorrichtung nach der Figur 16 ohne einer Deckfolie,
■ Figur 19 eine aufgebrochene Darstellung der Ablagevorrichtung nach der Figur 17,
■ Figur 20 eine Kombination einer Sensorvorrichtung nach der Figur 2 und eine Auswertungsvorrichtung, die an einer unteren Oberfläche der Grundplatte angebracht ist,
■ Figur 21 eine Ausführungsform einer Ablagevorrichtung mit der Kombination einer Sensorvorrichtung und einer Auswertungsvorrichtung nach der Figur 20,
■ Figur 22 eine Variante der Ausführungsform der Ablagevorrichtung nach der Figur 1, wobei die Sensorplatte eine Steckervorrichtung nach der Figur 4 aufweist,
■ Figur 23 eine Sensorvorrichtung im zusammengebauten Zustand, wobnei die Sensorplatte eine Steckervorrichtung nach der Figur 4 aufweist,
■ Figur 24 eine weitere Ausführungsform der Ablagevorrichtung.

In den Figuren können Bestandteile oder Merkmale der dargestellten Gegenstände mit zueinander gleicher oder identischer Funktion mit demselben Bezugszeichen in verschiedenen Figuren versehen sein.

Die Figuren 1, 5, 6 und 7 zeigen verschiedene Ausführungsformen der erfindungsgemäßen Ablagevorrichtung 1 mit einer Sensorvorrichtung 10. Die Sensorvorrichtung 10 ist aus einer Grundplatte 20 und einer Sensorplatte 100 gebildet und ist nach einer erfindungsgemäßen Ausführungsform gebildet. Die Figur 2 zeigt eine erste erfindungsgemäße Ausführungsform der Sensorvorrichtung 10, während die Figuren 3 und 4 verschiedene erfindungsgemäße Ausführungsform der Sensorplatte 100 zeigt.

Die Sensorplatte 100 ist insgesamt plattenförmig ausgebildet und kann dabei als eine Schicht hergestellt sein oder aus mehreren Schichten hergestellt sein, die aneinander fixiert sind. Für die Sensorplatte 100 ist in der Figur 1 exemplarisch ein ortsfestes Koordinatensystem mit einer Längsrichtung SX, eine Querrichtung SY und einer Dickenrichtung SZ eingetragen. Insbesondere können die SX-Richtung und die SY-Richtung jeweils als lokale Richtung definiert sein, die sich jeweils als Tangente an die untere Oberfläche 100b der Sensorplatte 100 ergibt. Dabei kann die SY-Richtung derart definiert sein, dass diese an jeder Stelle in Richtung einer Mittelachse M100 der Sensorplatte 100 verläuft, wobei sich die Mittelachse M100 als Verbindungslinie aller Mittelpunkte einer Verbindungslinie ergibt zwischen kürzesten Abständen von Randpunkten entlang zueinander entgegengesetzt gelegenen Randlinien der Sensorplatte 100. Als Randlinie kann die Verbindungslinie der in dieser Hinsicht jeweils relativ zueinander äußersten Punkte der Sensorplatte 100 verstanden werden. Auch kann das Koordinatensystem an Hand der SZ-Richtung definiert sein, die sich an jeder Stelle als die Richtung der jeweils kürzesten Verbindungslinie von Oberflächenpunkten der entgegen gesetzt zueinander gelegenen Oberflächen 100a, 100b ergibt, wobei als Ursprung des Koordinatensystems ein Punkt der unteren Oberfläche 100b genommen wird. Dabei kann die Längsrichtung SX festgelegt sein oder die Mittelachse M100 sein.

Die Sensorplatte 100 kann in jeder dieser Ausführungsformen als flexible Platte, also als Matte, und dabei insbesondere als elastische Platte ausgeführt sein. Alternativ dazu kann die Sensorplatte 100 in jeder dieser Ausführungsformen als starre Platte ausgeführt sein. Die Sensorplatte 100 weist eine erste oder obere Oberfläche 100a und eine zweite oder untere Oberfläche 100b auf. Weiterhin weist die Sensorplatte 100 zumindest eine Erfassungs-Teilschicht T auf. Die zumindest eine Erfassungs-Teilschicht T kann als Schicht oder Folie in der Sensorplatte 100 integriert sein. Dabei kann die Erfassungs-Teilschicht T als Folie oder Schicht auf einer ersten Oberfläche 110a einer Basisplatte der Sensorplatte 100 aufgebracht und z.B. aufgeklebt oder aufgetragen sein. Generell kann die Sensorplatte 100 auch mehrschichtig aufgebaut sei, wie dies in der Figur 1 mit den Schichten 110, 120, 130 gezeigt ist.

Die Grundplatte 20 ist wie die Sensorplatte 100 insgesamt plattenförmig ausgebildet und kann dabei als eine Schicht hergestellt sein oder aus mehreren Schichten hergestellt sein, die aneinander fixiert sind. Für die Grundplatte 20 ist in der Figur 1 exemplarisch ein ortsfestes Koordinatensystem mit einer Längsrichtung GX, eine Querrichtung GY und einer Dickenrichtung GZ eingetragen. Insbesondere können die GX-Richtung und die GY-Richtung jeweils als lokale Richtung definiert sein, die sich jeweils als Tangente an die untere Oberfläche 20b der Grundplatte 20 ergibt. Dabei kann die GY-Richtung derart definiert sein, dass diese an jeder Stelle in Richtung einer Mittelachse M20 der Grundplatte 20 verläuft, wobei sich die Mittelachse M20 als Verbindungslinie aller Mittelpunkte einer Verbindungslinie ergibt zwischen kürzesten Abständen von Randpunkten entlang zueinander entgegengesetzt gelegenen Randlinien der Grundplatte 20. Als Randlinie kann die Verbindungslinie der in dieser Hinsicht jeweils relativ zueinander äußersten Punkte der Grundplatte 20 verstanden werden. Auch kann das Koordinatensystem an Hand der GZ-Richtung definiert sein, die sich an jeder Stelle als die Richtung der jeweils kürzesten Verbindungslinie von Oberflächenpunkten der entgegen gesetzt zueinander gelegenen Oberflächen 20a, 20b ergibt, wobei als Ursprung des Koordinatensystems ein Punkt der unteren Oberfläche 20b genommen wird. Dabei kann die Längsrichtung GX festgelegt sein oder die Mittelachse M20 sein.

Die Grundplatte 20 kann in jeder dieser Ausführungsformen als flexible Platte, also als Matte, und dabei insbesondere als elastische Platte ausgeführt sein. Alternativ dazu kann die Grundplatte 20 in jeder dieser Ausführungsformen als starre Platte ausgeführt sein. Die Grundplatte 20 weist eine erste oder obere Oberfläche 20a und eine zweite oder untere Oberfläche 20b auf.

Nach der Erfindung weist die Sensorplatte 100 generell auf: zumindest eine Positionierungsausnehmung 101 zur Aufnahme einer Positionierungshalterung 102 bei seinem Zusammensetzen von Sensorplatte 100 und Grundplatte 20 zu einer Sensorvorrichtung 10 auf. In der Figur 2 ist der zusammengesetzte oder betriebsfähige Zustand der Sensorvorrichtung 10 nach der Figur 1 gezeigt. Die Positionierungsausnehmung 101 und die jeweils zugehörige Positionierungshalterung 102 sind derart ausgeführt, dass die Positionierungsausnehmung 101 der jeweils zugehörigen Positionierungshalterung 102 einen vorbestimmten minimalen Bewegungsspielraum zulässt. Die Außenkonturen der Positionierungsausnehmung 101 und der jeweils zugehörigen Positionierungshalterung 102 sind in der Dickenrichtung GZ bzw. SZ oder der Draufsicht auf die Oberfläche 100a gesehen derart geformt, dass die Positionierungshalterung 102 der jeweils zugehörigen Positionierungsausnehmung 101 eine lokale Bewegbarkeit der Sensorplatte 100 in allen Richtungen der flächigen Erstreckung derselben, also in der Längsrichtung SX und der Querrichtung SY innerhalb des maximal zulässigen und durch die Formgebung der Positionierungsausnehmung 101 definierten Bewegungsbereichs zulässt.

Nach einer Ausführungsform der Sensorplatte 100 ist diese derart ausgeführt, dass die zumindest eine Positionierungsausnehmung 101 eine Erfassungs-Teilschicht T der Sensorplatte 100 nicht durchragt und somit einem Bereich 103 gelegen ist, in dem sich die zumindest eine Erfassungs-Teilschicht T nicht erstreckt.

In der Ausführungsform der Sensorvorrichung 10 nach den Figuren 1 und 2 weist die Grundplatte 20 insgesamt acht Positionierungshalterungen 102a, 102b, 102c, 102d, 102e, 102f, 102g, 102h auf, die mit ihrer Längsrichtung von der Grundplatte 20 in der Dickenrichtung GZ der Grundplatte 20 wegragen. Generell kann die zumindest eine Positionierungshalterung 102, wie dies in den Figuren 1 und 2 dargestellt ist, stiftförmig, also als Positionierungsstift, und insbesondere zylindrisch gebildet sein und dabei eine kreisförmige Querschnittsform haben, wenn die Querschnittsform betrachtet wird, die sich in der GX-GZ-Ebene ergibt. Auch kann die Positionierungshalterung 102, wie dies in der Figur 6 dargestellt ist, eine ovale Querschnittsform haben. Alternativ sind mehreckige z.B. rechteckförmige Querschnittsformen für die Positionierungshalterung 102 möglich. Insbesondere kann vorgesehen sein, dass die Positionierungshalterung 102 im Querschnitt in der GX-GZ-Ebene gesehen nach Querschnittsform und Größe entlang der Dickenrichtung GZ gleichbleibend ist. Weiterhin kann die Positionierungshalterung 102 einstückig mit der Grundplatte 20 hergestellt sein (Figur 14). Alternativ dazu kann die Positionierungshalterung 102 als zu der Grundplatte 20 separates Bauteil hergestellt sein (z.B. Figuren 1, 5, 6, 7). In diesem Fall kann in der Grundplatte 20 eine Vertiefung 103 oder Ausnehmung geformt sein, in die die jeweilige einsetzbar ist. Alternativ kann die zumindest eine Positionierungshalterung 102 auch auf die Oberfläche 20a der Grundplatte 20 aufgebracht und z.B. aufgeklebt oder aufgeschweißt sein, wie auch aus der Figur 14 ersichtlich ist.

In der Ausführungsform der Sensorplatte 100 nach den Figuren 1 und 2 weist die Sensorplatte 100 insgesamt acht Positionierungsausnehmungen 101 a, 101 b, 101 c, 101d, 101 e, 101f, 101g, 101h zur Aufnahme jeweils einer der sechs Positionierungshalterungen 102a, 102b, 102c, 102d, 102e, 102f, 102g, 102h auf. Generell weist die Sensorplatte 100 zumindest eine Positionierungsausnehmung 101 auf. Die Anzahl sowie die Form und die Größe der Positionierungsausnehmung 101 und der jeweils zugehörigen Positionierungshalterung 102 sind, wie beschrieben, derart ausgeführt, dass eine Bewegungsfreiheit der Positionierungshalterung 102 in der jeweiligen Positionierungsausnehmung 101 gegeben aber in der SX- und SY-Richtung sowie in der Drehrichtung um die SZ-Achse begrenzt ist. Der Bewegungsspielraum kann derart vorgesehen sein, dass dieser in den in der SX- und SY-Richtung 1% bis 10% oder 1 bis 100% der durchschnittlichen Dicke der Sensorplatte 100 in der SZ-Richtung derselben beträgt. Der Bewegungsspielraum kann auch größer oder kleiner als der angegebene Bereich sein.

Auf diese Weise wird erreicht, dass auch bei großen Temperaturunterschieden, z.B. im Bereich zwischen 50K und 200K oder sogar 300K oder mehr, und daraus resultierenden Längenveränderungen der Sensorplatte 100 keine lokale Deformation derselben erfolgt und die Sensorplatte 100 spannungsfrei auf der Grundplatte 20 in vorgegebenen Grenzen positioniert ist. Dadurch wird auch die Sensorfunktion, die die Sensorplatte 100 bereitstellt oder unterstützt, nicht beeinträchtigt.

Die Sensorplatte 100 weist zumindest eine Erfassungs-Teilschicht T und eine Anschlussvorrichtung 17 zum elektrischen Anschließen der Sensorplatte 100 an eine Auswertungsvorrichtung 80 sowie eine Anordnung 150 von Leiterbahnen 15 auf, die die Anschlussvorrichtung 17 elektrisch mit der Erfassungs-Teilschicht T verbindet. Bei den Ausführungsformen, die in den Figuren 1, 4, 5 und 6 dargestellt sind, sind in der Sensorplatte 100 insgesamt sechs Erfassungs-Teilschichten 111, 112, 113, 114, 115, 116 integriert.

Erfindungsgemäß kann die Auswertungsfunktion der Auswertungsvorrichtung 80 derart vorgesehen sein, dass diese den Bewegungsbereich der Sensorplatte 100 auf der Grundplatte 20 als vorbestimmte Sensorplatten-Positionswerte oder Sensorplatten-Positionswertebereich eingespeichert hat, so dass die Auswertungsvorrichtung 80 einem Sensorsignal, das aufgrund einer erfassbaren physikalischen Gegebenheit durch die Erfassungs-Teilschicht T erzeugt worden ist, der erfassten physikalischen Gegebenheit eine Position innerhalb von Genauigkeitsgrenzen zuordnet, die durch den vorbestimmten Bewegungsbereich vorgegeben sind. Optional kann dabei auch eine jeweils mittels eines Temperatursensors (nicht dargestellt) erfasste Temperatur, z.B. der Sensorplatte 100 oder der Grundplatte 20, berücksichtigt werden.

Die die Auswertungsvorrichtung 80 kann insbesondere aus einer Basisplatte 81 und einem darauf angeordneten Gehäuse 82, in dem ein Funktionsmodul (nicht dargestellt) mit einer Auswertungsfunktion und eine Steckerbuchse 83 zum Einstecken einer Steckervorrichtung 17a der Anschlussvorrichtung 17 integriert ist. Die Auswertungsvorrichtung 80 kann generell auch als eine Leiterplatte, also ohne Gehäuse, ausgeführt sein.

Zur Ausbildung der erfindungsgemäßen Ablagevorrichtung 1 wird eine erfindungsgemäße Sensorvorrichtung 10 in eine Aufnahmevorrichtung A eingesetzt oder integriert. Die Aufnahmevorrichtung A kann als eine Rahmenvorrichtung ausgeführt sein, die aus einem Gestänge gebildet ist (nicht dargestellt). Alternativ dazu kann die Aufnahmevorrichtung A als gehäuseförmige Aufnahmevorrichtung 40 und z.B. wannenförmig gebildet sein, wie die z.B. an der Ausführungsform der Ablagevorrichtung 1 nach der Figur 1 dargestellt ist. Für die in der Figur 1 dargestellte Aufnahmevorrichtung 40 ist ein Koordinatensystem mit einer Längsrichtung BX, einer Querrichtung BY und einer Dickenrichtung BZ eingetragen.

Die in der Figur 1 dargestellte Aufnahmevorrichtung 40 weist eine Bodenplatte 55 und eine umlaufende Seitenwandung 50 auf, die Bodenplatte 55 umgrenzt und von dieser in der Dickenrichtung BZ absteht. Die Bodenplatte 55 und eine umlaufende Seitenwandung 50 umgrenzen somit einen Aufnahmeraum RS. In den Aufnahmeraum RS kann die Auswertungsvorrichtung 80 eingesetzt sein, wobei die Auswertungsvorrichtung 80 auf der Bodenplatte 55 gelegen sein kann.

An der dem Aufnahmeraum RS zugewandten Innenfläche der Seitenwandung 50 kann eine umlaufende oder abschnittsweise umlaufende Auflageplatte 56 angeordnet sein, auf die die Grundplatte 20 aufgelegt werden kann. Somit ergibt sich ein zwischen der Bodenplatte 55 und der Auflageplatte 56 erstreckender Wandabschnitt 51. Dabei kann die Grundplatte 20 und die Seitenwandung 50 sowie Auflageplatte 56 derart ausgeführt sein, dass die Grundplatte 20 in der Aufnahmevorrichtung 40 fix positioniert ist. Dabei kann insbesondere vorgesehen sein, dass die Grundplatte 20 in der Aufnahmevorrichtung 40 eingepresst gelegen ist. Bei der in der Figur 1 dargestellten Ausführungsform der Aufnahmevorrichtung 40 ist die Auflageplatte 56 in der Dickenrichtung BZ gesehen derart positioniert, dass sich in der Dickenrichtung BZ gesehen oberhalb der Auflageplatte 56 ein nach oben abstehender Wandabschnitt 52 erstreckt.

Generell kann die Ablagevorrichtung 1 eine Deckplatte 90 oder Deckfolie 90 aufweisen, die - falls diese vorgesehen ist - auf die Sensorplatte 100 zum Schutz derselben oder zur Erzielung ästhetischer, wie optischer und/oder haptischer Effekte aufgelegt ist.

Die Sensorplatte 100 stellt eine flächige Sensor-Funktion bereit, indem die Sensorplatte 100 zumindest eine Erfassungs-Teilschicht T aufweist. Die jeweilige Sensor-Funktion wird dadurch realisiert, dass die Sensorvorrichtung 10 eine Anschlussvorrichtung 17 und Leiterbahnen 18 aufweist, die jede der zumindest einen Erfassungs-Teilschicht T elektrisch mit der Anschlussvorrichtung 17 verbindet. Die zumindest eine Erfassungs-Teilschicht T ist jeweils insbesondere derart ausgeführt, dass an die Sensorplatte 100 Spannung angelegt wird. Dabei sind zwei außerhalb der Sensorvorrichtung 10 gelegene externe Spannungspole einer externen Energieversorgungsvorrichtung an die Anschlussvorrichtung 17 und dadurch über die Leiterbahnen 18 an die Erfassungs-Teilschicht T, entsprechend der jeweiligen Ausführungsform derselben, anschließbar.

Die flächige Sensor-Funktion, die durch die jeweilige Erfassungs-Teilschicht T realisiert ist, kann eine oder mehrere der folgenden Sensorfunktionen oder auch weitere Sensorfunktionen beinhalten oder bereitstellen: eine Drucksensor-Funktion, eine Näherungssensor-Funktion, eine elektromagnetische Strahlung erfassende Funktion. Die Sensorplatte 100 ist insbesondere derart ausgeführt, dass diese eine flächige Sensor-Funktion realisiert, durch die ein physikalischer Tatbestand auf oder an der ersten Oberfläche 100a - also "flächig" - erfasst wird, indem durch diesen eine durch die Anschlussvorrichtung 17 abgreifbare Spannungsänderung auftritt. Über die Anschlussvorrichtung 17 ist an jede der zumindest einen Erfassungs-Teilschicht T, die über zwei elektrische Leitungen mit der Anschlussvorrichtung 17 elektrisch verbunden ist, auch eine Auswertungsvorrichtung 80 anschließbar. Diese ist derart ausgeführt, dass diese die Sensorsignale, die von der Erfassungs-Teilschicht T aufgrund eines von dieser sensorisch erfassbaren physikalischen Tatbestands erzeugt werden, derart auswertet, dass diese den jeweils erfassten physikalischen Tatbestand ermittelt, z.B. indem ermittelt wird, ob ein hierfür vorgegebener Grenzwert überschritten wird.

Beispielsweise ist die Erfassungs-Teilschicht T als drucksensitive Schicht zur Realisierung einer Drucksensor-Funktion ausgeführt, durch die bei dem Auflegen eines Objektes auf die erste Oberfläche 100a als physikalischer Tatbestand eine Spannungsänderung an der Anschlussvorrichtung 17 abgreifbar ist und an die Auswertungsvorrichtung 80 übertragen wird. Daraufhin ermittelt die Auswertungsvorrichtung 80 mittels einer Auswertungsfunktion, dass das Auflegen eines Objektes auf die erste Oberfläche 100a erfolgt ist. Die Erfassungs-Teilschicht T kann dabei aus einem piezoelektrischen Material hergestellt sein, das bei einer zumindest lokalen Komprimierung eine mittels der Auswertungsvorrichtung 80 ermittelbare Spannungsänderung bewirkt.

Alternativ kann, wie hierin näher an Hand der Figur 3 beschrieben ist, die Erfassungs-Teilschicht T aus aneinander gelegenen Teilfolien K1, K2 gebildet sein, um eine flächenhafte Drucksensitivität zu realisieren. Mit jeder der Teilfolien K1, K2 ist jeweils eine elektrische Leitung L1 bzw. L2 verbunden. Dabei können, wie in der Figur 3 gezeigt, die Teilfolien K1, K2 derart ausgeführt sein, dass diese mäanderförmig ineinander greifen, um eine flächig optimierte Abdeckung zur Erreichung der flächenhaften Drucksensitivität zu realisieren. Wie in der Figur 3 gezeigt, können die Teilfolien K1, K2 kammartig mit Folienzähnen ausgeführt sein, die in der flächigen Erstreckung derselben sich überlappen und ineinander greifen. Die Teilfolien K1, K2 liegen in einem relativ geringen Abstand nebeneinander, der derart vorgesehen ist, dass zwischen diesen bei Anlegen einer elektrischen Spannung an die Leitungen L1, L2 kein elektrischer Strom fließt.

Bei den Ausführungsformen, die in den Figuren 1, 4, 5 und 6 dargestellt sind, sind in der Sensorplatte 100 insgesamt sechs Erfassungs-Teilschichten 111, 112, 113, 114, 115, 116 integriert, die in einer Basisplatte 110 gelegen oder integriert sein können. In jeder der Erfassungs-Teilschichten 111, 112, 113, 114, 115, 116 ist zumindest ein Paar von Teilfolien K1, K2 integriert, so dass sich ein Anordnung 150 von Leiterbahnen L1, L2 bzw. 15 ergibt. Die Basisplatte 110 ist insbesondere als Leiterplatte ausgeführt.

Bei den Ausführungsformen nach den Figuren 3 und 4 ist von den Folienkämmen K1, K2 ist ein erster Folienkamm K1 an eine erste elektrische Leitung L1 angeschlossen und über diese mittels der Anschlussvorrichtung 17 an einen ersten externen Spannungspol der externen Energieversorgungsvorrichtung anschließbar. Weiterhin ist von den Folienkämmen K1, K2 ein zweiter Folienkamm K2 an eine zweite elektrische Leitung L2 angeschlossen und über diese mittels der Anschlussvorrichtung 17 an einen zweiten externen Spannungspol der externen Energieversorgungsvorrichtung anschließbar. Die elektrische Leitungen L1, L2 sind mit der Auswertungsvorrichtung 80, die die Energieversorgungsvorrichtung aufweist oder an dieser angeschlossen ist, elektrisch verbunden.

Die Sensorplatte 100 ist bei dieser Ausführungsform aus einer Basisplatte 110, in die die zumindest eine Erfassungs-Teilschicht T integriert ist, eine Abstandhaltervorrichtung 120 und eine Leitungsschicht 130 gebildet. Die Leitungsschicht 130 ist eine Schicht oder Folie aus einem elektrisch leitenden Material.

Die Abstandhaltervorrichtung 120 kann als Schicht oder als Anordnung von Abstandhaltern ausgeführt sein. Bei der Realisierung der Abstandhaltervorrichtung 120 als Schicht kann die Abstandhaltervorrichtung 120 insbesondere als flexibles Gitter, also als Gitter aus einem flexiblen und insbesondere elastischen Material gebildet sein. Die Abstandhaltervorrichtung 120 ist generell derart ausgeführt, dass bei einem Auflegen eines Gegenstands vorbestimmter Minimalgröße und vorbestimmten Minimalgewichts auf die Oberfläche 100a, die Teilfolien K1, K2 über die Leitungsschicht 130 elektrisch leitend miteinander verbunden sind. Dadurch kann bei einem Auflegen eines Gegenstands auf die Sensorplatte 100 durch die Auswertungsvorrichtung 80 eine Spannungsänderung und somit eben physikalische Tatbestand dieses Auflegens eines Gegenstands auf die Sensorplatte 100 ermittelt werden.

Bei der Ausführungsform der Sensorplatte 100 nach der Figur 3 ist die Anschlussvorrichtung 17 als Flachkabel 107 mit einer am Ende desselben angeordneten Steckervorrichtung 17a ausgeführt.

Im Unterschied dazu ist bei der Ausführungsform der Sensorplatte 100 nach der Figur 4 die Anschlussvorrichtung 117 als mit der Basisplatte 110 physisch integrierter Steckvorrichtung 17a ausgeführt. Die Steckvorrichtung 17a ist dabei integraler Bestandteil der Basisplatte 110 und kann an dieser befestigt, z.B. geklebt oder angeschweißt, oder einteilige mit dieser hergestellt sein.

Die Figur 4 zeigt eine weiteren Ausführungsform der erfindungsgemäßen Ablagevorrichtung 40 die keine abstehende Wandung 52 aufweist, so dass die Sensorvorrichtung 10 auf die Ablagevorrichtung 40 und in der BX-Richtung von dieser absteht.

Die Figur 6 zeigt eine Ablagevorrichtung 1 bzw. Sensorvorrichtung 10, bei der nur eine einzige Positionierungshalterung 102 und einer Sensorplatte mit einer einzigen Positionierungsausnehmung 103 zur Aufnahme der Positionierungshalterung 102 gebildet ist, wobei die Positionierungshalterung 102 und einer Sensorplatte mit einer einzigen Positionierungsausnehmung 103 eine Querschnittsform, hier eine ovale Querschnittsform, haben, mit der allein der Bewegungsspielraum der Sensorplatte 100 auf der Grundplatte 20 in der GX- und GY-Richtung eingegrenzt ist.

Die Figur 7 zeigt eine perspektivische Darstellung einer weiteren Ausführungsform der erfindungsgemäßen Ablagevorrichtung 40, die gegenüber der Ablagevorrichtung nach der Figur 1 eine andersartige Sensorvorrichtung mit nur eine Erfassungs-Teilschicht T bzw. 111 aufweist, so dass die Sensorplatte mit Positionierungsausnehmungen 103 zur Aufnahme der Positionierungshalterungen 102 versehen ist, die außerhalb der Erfassungs-Teilschicht T bzw. 111 gelegen sind.

Die Figur 8 zeigt eine weitere Ausführungsform der erfindungsgemäßen Ablagevorrichtung 40, die gegenüber der Ablagevorrichtung nach der Figur 1 eine durchgehende Auflageplatte 56 aufweist, dies somit den Aufnahmeraum RS abdeckt. Zu diesem Zweck weist die Öffnungsvorrichtung 60 eine zweite Öffnung 62 im Bereich der Wandabschnitts 52 sowie eine erste Öffnung 61 im Bereich der Wandabschnitts 52 auf, so dass die Anschlussvorrichtung 17 in Form eines Kabels 107 durch die Öffnungen 61, 62 in den Aufnahmeraum RS zu der Auswertungsvorrichtung 80 geführt werden kann.

Die Figur 10 zeigt eine Ausführungsform der Sensorplatte 100 der Sensorvorrichtung 10, die zwischen den Erfassungs-Teilschichten T erstreckende Schlitze S aufweist. Nach einer Ausführungsform der Sensorplatte 100 ist dabei vorgesehen, dass sich diese von einem Seitenrand aus entlang der SX-Richtung bis über die Mittellinie M100 hinaus uns insbesondere über mehr als 75% der Breite der Sensorplatte 100 in der Querrichtung SY erstrecken.

Wie in den Figuren 11 gezeigt ist, kann auch vorgesehen sein, dass sich zwischen jeweils zwei Erfassungs-Teilschichten T zwei Schlitze S erstrecken, die von jeweils entgegen gesetzt zueinander gelegenen Randseiten der Sensorplatte 100 ausgehen. Dabei können die Positionierungsausnehmungen 101 zwischen den zwei Schlitzen S gelegen sein.

Wie in der Figur 12 dargestellt ist, kann die Sensorplatte 100 eine Auflageplatte 105 aufweisen, auf der Basisplatte 110 aufgebracht ist. Die Auflageplatte 105 kann als eine formsteife oder starre Platte ausgeführt sein.

Wie in der Figur 9 und folgenden Figuren und insbesondere den Figuren 13a, 13b und 14 dargestellt ist, müssen die Positionierungshalterungen 102 in der SZ-Richtung nicht durch die Positionierungsausnehmungen 101 hindurchragen. Stattdessen kann auch vorgesehen sein, dass diese nur teilweise die Positionierungsausnehmungen 101 durchragen. Die Positionierungsausnehmungen 101 können dabei auch als Vertiefungen der Oberfläche 100b ausgeführt sein.

Figur 24 zeigt eine weitere Ausführungsform der Ablagevorrichtung, bei der die Steckervorrichtung gemäß Figur 4 in eine Steckerbuchse 137, die in der Gehäusewandung 50 integriert ist, eingesteckt ist, und bei weiterhin eine Steckervorrichtung 127 der Auswertungsvorrichtung 80 in die Steckerbuchse 137 eingesteckt ist.

Bei den Ausführungsformen der Ablagevorrichtung 1 kann die Abdeckvorrichtung 90 als Deckfolie oder flexible Deckplatte ausgestaltet sein.

Weiterhin kann bei den Ausführungsformen der Ablagevorrichtung 1 vorgesehen sein, dass die Aufnahmevorrichtung 10 einen an der Innenfläche der Seitenwandung umlaufenden Sims aufweist, auf dem die Grundplatte 20 gelagert ist.

Auch kann bei den Ausführungsformen der Ablagevorrichtung 1 die Aufnahmevorrichtung 10 und die Grundplatte 20 einstückig hergestellt sind.

Bei den Ausführungsformen der Ablagevorrichtung 1 kann vorgesehen sein, dass die Durchgangsöffnung 60 eine Randausnehmung 61 an einem Randabschnitt der Seitenwandung 50 aufweist.

Bei den Ausführungsformen der Ablagevorrichtung 1 kann vorgesehen sein, dass die Durchgangsöffnung 60 eine Fenster-Ausnehmung 62 in der Seitenwandung 50 aufweist.

Bei den Ausführungsformen der Ablagevorrichtung 1 kann vorgesehen sein, dass die Durchgangsöffnung 60 eine Randausnehmung 53 an einem Randabschnitt der Grundplatte 20 aufweist.

## Patentansprüche

1. Sensorvorrichtung (10), aufweisend:
■ eine Grundplatte (20),
■ eine auf der Grundplatte (20) gelegene Sensorplatte (100), wobei die Sensorplatte (100) aufweist: zumindest eine Positionierungsausnehmung (101 a, 101b, 101c, 101d, 101e, 101f, 101g, 101h) zur Positionierung der Sensorplatte (100) innerhalb eines maximal zulässigen Bewegungsbereichs auf der Grundplatte (20), zumindest eine Erfassungs-Teilschicht(111, 112, 113, 114, 115, 116) und eine Anschlussvorrichtung (17) zum elektrischen Anschließen der Sensorplatte (100) an eine Auswertungsvorrichtung (80),
wobei die Grundplatte (20) zumindest einen Positionierungshalterung (102a, 102b, 102c, 102d, 102e, 102f, 102g, 102h) aufweist, der von der Grundplatte (20) mit seiner Längsrichtung in der Dickenrichtung (SZ) der Sensorvorrichtung (10) wegragt, wobei die Positionierungshalterung (102a, 102b, 102c, 102d, 102e, 102f, 102g, 102h) derart auf der Grundplatte (20) angeordnet und derart gestaltet sind, dass sich jeder Positionierungshalterung (102a, 102b, 102c, 102d, 102e, 102f, 102g, 102h) in jeweils eine Positionierungsausnehmung hinein erstreckt und in seinem Querschnitt über seine gesamte Längserstreckung derart gestaltet ist, dass die Positionierungsausnehmung eine lokale Bewegbarkeit der Sensorplatte (100) in allen Richtungen ihrer flächigen Erstreckung innerhalb des maximal zulässigen Bewegungsbereichs zulässt.

2. Sensorvorrichtung (10) nach dem Anspruch 1, wobei die Anschlussvorrichtung (17) ein Flachkabel und eine an diesem angeordnete Steckervorrichtung zum Einstecken in eine Anschlussvorrichtung der Auswertungsvorrichtung aufweist.

3. Sensorvorrichtung (10) nach dem Anspruch 1, wobei die Anschlussvorrichtung (17) eine direkt an der Sensorplatte (100) ausgebildete Steckervorrichtung zum Einstecken in eine Anschlussvorrichtung der Auswertungsvorrichtung aufweist.

4. Sensorvorrichtung (10) nach einem der voranstehenden Ansprüche, wobei die Sensorplatte (100) aus einer Basisplatte (110), einer auf dieser gelegenen Abstandhalterschicht (120) und einer auf dieser gelegenen Leitungsschicht (130) gebildet ist.

5. Ablagevorrichtung (1), aufweisend:
■ eine Aufnahmevorrichtung (40) mit einer Bodenplatte (55) und einer in einer Dickenrichtung (BZ) der Aufnahmevorrichtung (10) oberhalb der Bodenplatte (55) gelegene Grundplatte (20), eine umlaufende Seitenwandung (50), die einen zwischen der Bodenplatte (55) und der Grundplatte (20) gelegenen Elektronik-Aufnahmeraum (RE) seitlich umgrenzt und von der Grundplatte zur seitlichen Umgrenzung eines oberhalb der Grundplatte gelegenen Sensor-Aufnahmeraums (RS) absteht,
■ eine auf der Grundplatte (20) gelegene Sensorplatte (100), wobei die Sensorplatte (100) zumindest zwei Positionierungsausnehmungen (101 a, 101 b, 101c, 101d, 101e, 101f, 101g, 101h) zur Positionierung der Sensorplatte (100) innerhalb eines maximal zulässigen Bewegungsbereichs und zumindest eine Erfassungs-Teilschicht aufweist,
wobei die Grundplatte (20) oder die Seitenwandung (50) zumindest eine Durchgangsöffnung (60) zur Hindurchführung einer mit der Sensorplatte (100) verbundenen elektrischen Anschlussvorrichtung (17) aufweist, um einen Anschluss der Sensorplatte an eine in dem Elektronik-Aufnahmeraum angeordneten Auswertungsvorrichtung oder Leiterplatte (80) zu ermöglichen,
wobei die Grundplatte (20) zumindest eine Positionierungshalterung (102a, 102b, 102c, 102d, 102e, 102f, 102g, 102h) aufweist, die von der Grundplatte (20) mit ihrer Längsrichtung in der Dickenrichtung der Aufnahmevorrichtung (10) wegragen, wobei die Positionierungshalterunge (102a, 102b, 102c, 102d, 102e, 102f, 102g, 102h) derart auf der Grundplatte angeordnet und derart gestaltet sind, dass sich jeder Positionierungshalterung (102a, 102b, 102c, 102d, 102e, 102f, 102g, 102h) in jeweils eine Positionierungsausnehmung hinein erstreckt und in seinem Querschnitt über seine gesamte Längserstreckung derart gestaltet ist, dass die Positionierungsausnehmung eine lokale Bewegbarkeit der Sensorplatte (100) in allen Richtungen ihrer flächigen Erstreckung innerhalb des maximal zulässigen Bewegungsbereichs zulässt,
wobei die Sensorplatte (100) in ihrer flächigen Erstreckung derart gestaltet ist, dass zur Vermeidung einer Berührung des Seitenrands mit der Seitenwandung (50) aufgrund thermischer Längenveränderung der Sensorplatte (100) der diese umgrenzende Seitenrand an jeder Stelle einen vorbestimmten Mindestabstand von der Seitenwandung (50) entfernt liegt.

6. Ablagevorrichtung (1) nach dem Anspruch 5, wobei der zumindest zwei Positionierungshalterungen (102a, 102b, 102c, 102d, 102e, 102f, 102g, 102h) jeweils eine zylindrische Form haben.

7. Ablagevorrichtung (1) nach dem Anspruch 5, wobei die Positionierungshalterung (102a, 102b, 102c, 102d, 102e, 102f, 102g, 102h) einstückig mit der Grundplatte (20) hergestellt sind.

8. Ablagevorrichtung (1) nach einem der voranstehenden Ansprüche 5 bis 7, wobei die zumindest zwei Positionierungsausnehmungen (101 a, 101 b, 101 c, 101 d, 101e, 101f, 101g, 101h) jeweils einen kreisrunden oder zylindrischen Querschnitt haben.

9. Ablagevorrichtung (1) nach einem der voranstehenden Ansprüche 5 bis 8, wobei die Sensorplatte (100) eine Basisplatte (110) und zumindest eine in der Sensorplatte (100) integrierte druckempfindliche Erfassungs-Teilschicht (111, 112, 113, 114, 115, 116) aufweist.

10. Ablagevorrichtung (1) nach dem Anspruch 9, wobei die Sensorplatte (100) zumindest zwei in der Basisplatte (110) integrierte druckempfindliche Erfassungs-Teilschichten (111, 112, 113, 114, 115, 116) aufweist und die die Sensorplatte (100) Schlitze aufweist, die sich zwischen die von einem Seitenrand der Basisplatte (110) her über mehr als die Hälfte des zwischen den Erfassungs-Teilschichten (111, 112, 113, 114, 115, 116) gelegenen Abschnitt der Sensorplatte (100) erstrecken.

11. Ablagevorrichtung (1) nach einem der Ansprüche 9 oder 10, wobei die Sensorplatte (100) aus einer Auflageplatte (105) und der Basisplatte (110) gebildet ist, die Unterplatte die Positionierungsausnehmungen (101 a, 101 b, 101 c, 101 d, 101 e, 101f, 101g, 101h) aufweist und die Positionierungshalterunge (102a, 102b, 102c, 102d, 102e, 102f, 102g, 102h) nur innerhalb der Auflageplatte erstrecken.

12. Ablagevorrichtung (1) nach dem Anspruch 11, wobei die Positionierungsausnehmungen (101a, 101b, 101c, 101d, 101e, 101f, 101g, 101h) nur in der Unterplatte (105) ausgebildet sind und sich die Positionierungshalterunge (102a, 102b, 102c, 102d, 102e, 102f, 102g, 102h) nur innerhalb der Positionierungsausnehmungen (101a, 101b, 101c, 101d, 101e, 101f, 101g, 101h) erstrecken.

13. Ablagevorrichtung (1) nach einem der Ansprüche 11 oder 12, wobei die Unterplatte starr gebildet ist.

14. Ablagevorrichtung (1) nach einem der Ansprüche 9 bis 13, wobei die druckempfindliche Erfassungs-Teilschichten (111, 112, 113, 114, 115, 116) jeweils zwei ineinandergreifende kammförmige Folien aufweist, die in der jeweiligen Erfassungs-Teilschichten (111, 112, 113, 114, 115, 116) zur elektrischen Verschaltung derselben als Kondensator gelegen ist und die als Kondensator elektrisch verschaltet werden können.

15. Ablagevorrichtung (1) nach einem der voranstehenden Ansprüche 5 bis 14, wobei die Abdeckvorrichtung (90) die Sensorplatte (100) überdeckt, und die Abdeckvorrichtung (90) auf der Sensorplatte (100) oder auf einer oberen Randfläche (25) der Seitenwandung (50) gelegen ist.
